# EUROPÄISCHE PATENTANMELDUNG

(11) **EP 1 321 991 A1**
(43) Veröffentlichungstag der Anmeldung: **25.06.2003**
(21) Anmeldenummer: 02027792.7
(22) Anmeldetag: 12.12.2002
(51) Int. Cl.: H01M 2/10, H01M 2/02

(54) **Galvanisches Element mit dünnem, flachem und flexiblem metallischem Gehäuse**

(30) Priorität: 20.12.2001 DE 10162832
(71) Anmelder: VARTA Microbattery GmbH, 30419 Hannover (DE)
(72) Erfinder: Birke-Salam, Fatima, Dr., 73479 Ellwangen (DE); Wöhrle, Thomas, Dr., 73479 Ellwangen (DE); Birke, Peter, Dr., 73479 Ellwangen (DE); Holl, Konrad, Dr., 73434 Aalen-Dewangen (DE); Fürst, Stefan, 73492 Schwabsberg (DE); Stelzig, Heinrich, 73494 Rosenberg (DE); Ilic, Dejan, Dr., 73479 Ellwangen (DE)
(74) Vertreter: Patentanwälte Ruff, Wilhelm, Beier, Dauster & Partner

(57) **Zusammenfassung**

Bei einem dünnen, flachen und flexiblen galvanischen Element besteht das metallische Gehäuse aus einer Folie aus einem Kupfermaterial mit einem Kupferanteil von mindestens 95 Gew.% und einem Legierungszusatz aus Leichtmetall einer Hauptgruppe, wobei sich Kupfer und zulegiertes Leichtmetall um mindestens 15 und höchstens 26 in der Ordnungszahl und um mindestens 400°C und höchstens 950° C im Schmelzpunkt unterscheiden und das zulegierte Metall in Verbindungen ein- bis dreiwertig vorliegt und beim Zulegieren die kubisch flächenzentrierte Kugelpackung des Kupfers derart modifiziert, dass dessen Dichte von 8,94 g/cm³ um wenigstens 0,03 g/cm³ geändert wird und wobei die Folie auf ihrer in das Gehäuse weisenden Seite mit einer Haftung vermittelnden Schicht versehen ist.
Die Schicht zur Erzeugung der Rauigkeit besteht aus elektrochemisch abgeschiedenen Kupferkristalliten.
Der Legierungszusatz ist vorzugsweise Magnesium und kristallisiert in der hexagonal dichtesten Kugelpackung.

## Beschreibung

Gegenstand der Erfindung ist ein galvanisches Element mit dünnem, flachem und flexiblem metallischem Gehäuse.

Extrem dünne, flexible galvanische Elemente mit einer Gesamtdicke von weniger als 0,5 mm sind beispielsweise als Energiespeicher in "Active Smart Cards" erforderlich. Bei solchen dünnen elektronischen Chipkarten ist der flache Energiespeicher zur Stromversorgung des IC-Chips oder anderer Bauelemente wie integrierter Miniatursensoren vorgesehen.

Bei besonders dünnen Energiespeichern mit Dicken von weniger als 0,5 mm ist insbesondere die Ausgestaltung und das Material des Gehäuses problematisch. Als Becher und Deckel kann eine massive Metallfolie oder ein Kunststoff-Metallfolie-Kunststoffverbund dienen. Ein bekanntes Beispiel dafür ist veredelte Aluminiumverbundfolie. Letztere ist aber in der Regel ungeeignet, da derartige Verbünde nur bei Dicken in einem Bereich von 80-120 µm ausreichend stabil sind. Derart hohe Materialdicken bedeuten einen Eintrag von Totmaterial, der nicht wünschenswert ist, da dadurch die Energiedichte der Gesamtzelle erheblich negativ beeinträchtigt wird. Man strebt daher für Anwendungen der vorgenannten Art ein Gehäuse aus massiven Metallfolien an, die einen typischen Dickenbereich von 15-35 µm, vorzugsweise 16-25 µm aufweisen, trotzdem aber eine hohe mechanische Flexibilität und Stabilität sowie gleichzeitig herausragende Haftungseigenschaften für Siegelfolie und Elektroden aufweisen und auch eine mögliche optionale Plastikummantelung bei Verformung nicht schädigen.

Typische massive Metallgehäuse von Knopfzellen bestehen aus Edelstahl, Bimetall (Nickel/Edelstahl) oder Trimetall (Nickel/Edelstahl/Kupfer). Die äußere Nickelschicht ist vorteilhaft für die elektrische Kontaktierung zum Verbraucher, eine innere Kupferschicht kann sowohl für eine Kontaktierung zum Zellinneren als auch aus elektrochemischen Gründen vorteilhaft sein.

Ein Herunterwalzen von Edelstahl in einen Dickenbereich von 20-25 µm gestaltet sich jedoch aufwendig und extrem kostenintensiv. Will man noch zusätzlich die oben genannten Vorteile des Bi- oder Trimetalls nutzen, so ist das genannte Problem noch erheblich größer, da noch zusätzlich eine bzw. zwei weitere Metallagen die Dicke erhöhen. Gewalztes Material verfügt überdies über sehr glatte Oberflächen, die sowohl die innere Kontaktierung der Elektroden und der isolierenden Siegelfolie zwischen Becher und Deckel wie auch die äußere Kontaktierung der Ableiter erheblich erschweren. Insbesondere gestaltet sich die großtechnische Aufrauung von dünnen Edelstahlfolien extrem schwierig, hier gibt es praktisch keine existierenden Lösungen.

Manche Metallfolien, beispielsweise Nickel, scheiden aufgrund der elektrochemischen Inkompatibilität aus.

Kupfer erfüllt alle bisher genannten Anforderungen am besten, es ist leicht bis zu Dicken von 10 µm walzbar, ist im Bereich der äußeren Ableiter um vieles leichter zu kontaktieren als Edelstahl und die Härte bzw. Weichheit lässt sich durch Walzen bzw. Glühen einstellen. Alle diese Prozesse sind kostengünstig durchführbar und Kupfer verfügt über ein ausreichendes elektrochemisches

Stabilitätsfenster für viele galvanische Elemente.

Bei einer Anwendung von dünnen galvanischen Elementen in Active Smart Cards ist ein vielfaches Biegen um verschiedene Achsen der Karte (ISO-Biegetest) von großer Bedeutung. Hierbei dürfen keine Falten, kein Reißen oder keine Beschädigung der äußeren Hausung (Plastikkarte) und der galvanischen Zelle selbst entstehen.

Der Erfindung liegt die Aufgabe zugrunde, ein galvanisches Element anzugeben, welches bei Verwendung in einer aktiven Chipkarte insbesondere die Anforderungen an mechanische Stabilität gegenüber Biegebeanspruchungen und Torsionsbeanspruchungen erfüllt.

Diese Aufgabe wird bei einem galvanischen Element der eingangs genannten Gattung durch die kennzeichnenden Merkmale des Anspruchs 1 gelöst. In den Unteransprüchen sind vorteilhafte Ausgestaltungen der Erfindung angegeben.

Kupfer mit mindestens einem Legierungszusatz erfüllt diese Bedingungen am vorteilhaftesten. Erfindungsgemäß besteht das Gehäuse aus einer Folie aus einem Kupfermaterial mit einem Kupferanteil von mindestens 95 Gew.%, dessen Elastizitätsmodul durch Zulegieren mindestens eines Leichtmetalls aus einer Hauptgruppe derart verändert ist, dass eine so hergestellte galvanische Zelle isokonform ist für den Einbau in "Active Smart Cards", da der ISO Biegetest nach DIN - ISO 7816-1 und die Prüfvorschrift nach DIN ISO/IEC 10 373 erfüllt werden.

Dabei unterscheiden sich Kupfer und zulegiertes Metall um mindestens 15 und höchstens 26 in der Ordnungszahl, und um mindestens 400°C und höchstens 950° C im Schmelzpunkt. Dabei bewirkt der große Unterschied in den Ordnungszahlen, dass die dichteste Kugelpackung über Besetzung von Zwischengitterplätzen durch das zulegierte Metall mit deutlich kleinerem lonenradius verstärkt wird, was sich positiv auf Biegbarkeit und Duktilität auswirkt. Der große Unterschied in den Schmelzpunkten bedeutet gleichzeitig, dass diese Bindung nicht zu einer zu starken Verzerrung des Kupfergitters beiträgt. Niedrige Schmelzpunkte bedeuten niedrigere Gitterbindungsenergie, die die zulegierten lonen mitbringen. Das erfindungsgemäß zulegierte Leichtmetall kommt in Verbindungen vorzugsweise zweiwertig vor, kristallisiert vorzugsweise in der hexagonal dichtesten Kugelpackung und modifiziert beim Zulegieren die kubisch flächenzentrierte Kugelpackung des Kupfers dahingehend, dass dessen Dichte von 8,94 g/cm³ um wenigstens 0,03 g/cm³ verändert wird.

Als Legierungsmetall sind Lithium, Magnesium und Aluminium geeignet, besonders vorteilhaft ist die Verwendung von Magnesium.

Der Anteil des Legierungszusatzes beträgt zwischen 0,01 bis 0,2 Gew.%, vorzugsweise zwischen 0,05 bis 0,15 Gew.%.

Die Zellhöhe ist dabei vorzugsweise kleiner als 0,5 mm und die nominale Zellkapazität kleiner 50 mAh.

Es ist weiterhin vorteilhaft, auf der Legierungsmetallfolie zur Haftvermittlung für Elektroden und Siegelfolie einseitig eine Lage von Kupferkristalliten elektrochemisch abzuscheiden, die eine Aufrauhung der Oberfläche bewirkt und bei der anschließenden Hausung der Zelle nach innen zeigt. Ein Verfahren zur Abscheidung einer solchen Schicht ist der deutschen Patentanmeldung 101 08 695.4 zu entnehmen.

### Beispiel:

Eine pastöse Masse wird hergestellt, indem man 77 Gewichtsprozent bei 360° C thermisch aktivierten Braunstein (elektrolytisches MnO₂), 6 Gewichtsprozent Graphit (KS 6, Timrex), 2 Gewichtsprozent Leitruß (Super P, Erachem) 7 Gewichtsprozent Polyvinylidenfluorid-Hexafluorpropylen (Kynar Flex 2801, Elf Atochem) und 8 Gewichtsprozent Propylencarbonat (Merck) in Aceton innig vermischt und die so erhaltene Masse auf einen Polyolefinseparator (Polypropylen, Celgard 2500) aufrakelt, das Trägerlösemittel verdampft, das so erhaltene Band Vakuum trocknet (110 ° C, 48 h), mit einem organischen Lithiumelektrolyten der Zusammensetzung 0,96 M LiClO₄ in 87:13 Vol% Propylencarbonat zu Ethylmethylcarbonat tränkt, die Separator/Elektrode-Verbundstückchen in 1,6 x 2,3 cm² Größe ausstanzt und in ein Kupferfoliengehäuse einlegt, auf dessen Deckelseite Lithium zuvor aufgepresst wurde, und dessen Becherseite gegebenenfalls zusätzlich zu der Kupferkristallitschicht mit einem graphitbasierten Leitfähigkeitsverbesserer versehen ist. Zwischen Becher und Deckel wird in den Bereichen, in denen Kupfer auf Kupfer trifft, jeweils eine Isolationsschicht (Siegelschicht) vorgesehen und es erfolgt eine Ultraschallverschweißung. Erfindungsgemäß ist das Gehäuse-Kupfer hierbei mit 0,11 Gewichtsprozent Magnesium legiert.

Eine so hergestellte galvanische Zelle ist isokonform für den Einbau in "Active Smart Cards", da der ISO Biegetest nach DIN - ISO 7816-1 und die Prüfvorschrift nach DIN ISO/IEC 10' 373 erfüllt wird. Beim dynamischen Biegetest wird die Karte mit einer Frequenz von 30 Biegungen pro Minute (= 0,5 Hz) 2 cm in der Länge bzw. 1 cm in der Breite gewölbt. Eine Karte muss bei diesem Test mindestens 250 Biegungen in jede der vier möglichen Richtungen (insgesamt also 1000 Biegungen) ohne Schäden überstehen. Beim dynamischen Torsionstest wird die Karte ± 15° um die Längsachse mit einer Frequenz von 30 Biegungen pro Minute (=0,5 Hz) belastet. Der Standard verlangt 1000 Torsionen, ohne dass die Chipfunktionalität ausfällt oder mechanische Schäden an der Karte sichtbar werden.

## Patentansprüche

1. Galvanisches Element mit dünnem, flachem und flexiblem metallischem Gehäuse **dadurch gekennzeichnet, dass** das Gehäuse aus einer Folie aus einem Kupfermaterial mit einem Kupferanteil von mindestens 95 Gew.% und einem Legierungszusatz aus Leichtmetall einer Hauptgruppe besteht, wobei sich Kupfer und zulegiertes Leichtmetall um mindestens 15 und höchstens 26 in der Ordnungszahl und um mindestens 400°C und höchstens 950° C im Schmelzpunkt unterscheiden und dass das zulegierte Metall in Verbindungen ein- bis dreiwertig vorliegt und beim Zulegieren die kubisch flächenzentrierte Kugelpackung des Kupfers derart modifiziert, dass dessen Dichte von 8,94 g/cm³ um wenigstens 0,03 g/cm³ geändert wird und dass die Folie auf ihrer in das Gehäuse weisenden Seite mit einer Haftung vermittelnden Schicht versehen ist.

2. Galvanisches Element nach Anspruch 1, **dadurch gekennzeichnet, dass** die Haftung vermittelnde Schicht zur Erzeugung der Rauigkeit aus elektrochemisch abgeschiedenen Kupferkristalliten besteht.

3. Galvanisches Element nach Anspruch 1 oder 2, **dadurch gekennzeichnet, dass** der Anteil des Legierungszusatzes zwischen 0,01 bis 0,2 Gew.%, vorzugsweise zwischen 0,05 bis 0,15 Gew.% beträgt.

4. Galvanisches Element nach einem der Ansprüche 1 bis 3, **dadurch gekennzeichnet, dass** der Legierungszusatz Magnesium ist und in der hexagonal dichtesten Kugelpackung kristallisiert.

5. Galvanisches Element nach einem der Ansprüche 1 bis 4, **dadurch gekennzeichnet, dass** die Zellhöhe kleiner als 0,5 mm und die nominale Zellkapazität kleiner 50 mAh ist.
